# EUROPÄISCHE PATENTSCHRIFT

(11) **EP 2 043 422 B1**
(45) Veröffentlichungstag und Bekanntmachung des Hinweises auf die Patenterteilung: **24.11.2010**
(21) Anmeldenummer: 07765759.1
(22) Anmeldetag: 02.07.2007
(51) Int. Cl.: A01D 41/14

(54) **HYDRAULISCHE ANORDNUNG**
HYDRAULIC ARRANGEMENT
INSTALLATION HYDRAULIQUE

(30) Priorität: 14.07.2006 DE 102006032599
(43) Veröffentlichungstag der Anmeldung: 08.04.2009
(73) Patentinhaber: Deere & Company, Moline, IL 61265-8098 (US)
(72) Erfinder: BITTER, Marcus, 68199 Mannheim (DE)
(74) Vertreter: Holst, Sönke
(86) Internationale Anmeldenummer: PCT/EP2007/056645
(87) Internationale Veröffentlichungsnummer: WO 2008/006730

(56) Entgegenhaltungen:
- EP-A- 1 659 087
- EP-A1- 1 108 351
- DE-A1- 10 330 344
- DE-U1-202004 017 743
- US-A- 6 047 228
- US-B1- 6 901 729

## Beschreibung

Hydraulische Anordnung zur Regelung eines Hubwerks einer landwirtschaftlichen Maschine, mit wenigstens einem ersten eine mit Druck beaufschlagbare Kammer aufweisenden Hydraulikzylinder, einem proportional verstellbaren Zuflussventil, welches ausgangsseitig über eine erste Zuflussleitung mit der Kammer und welches eingangsseitig mit einer Hydraulikpumpe verbunden ist, wenigstens einer ersten Abflussleitung, welche eine Verbindung zwischen der Kammer und einem Hydrauliktank herstellt, Verstellmittel zur Erzeugung eines Verstellsignals für den Hydraulikzylinder und einer elektronischen Steuereinheit

Landwirtschaftliche Maschinen, z.B. Erntemaschinen oder Traktoren, verfügen über Vorsatzgeräte oder Anbaugeräte, die über so genannte Hubwerke im Front- oder Heckbereich der Maschinen angeordnet sind. Die Hubwerke ermöglichen ein Heben und Senken der Vorsatz- bzw. Anbaugeräte in eine Transport- bzw. Arbeitsstellung. Es sind Hubwerke bekannt, die neben einer durch Hydraulikzylinder gesteuerten Heben und Senken Funktion ferner auch über eine Funktion zum Einstellen eines Bodenanpressdrucks für das Vorsatz- bzw. Anbaugerät verfügen oder einen Lageausgleich des Vorsatz- bzw. Anbaugeräts ermöglichen.

Ein Beispiel für ein derartiges Hubwerk ist in der US 6,901,729 B1 offenbart. Darin wird eine hydraulische Anordnung für ein Hubwerk eines Erntevorsatzes einer Erntemaschine vorgeschlagen, welche sowohl eine Heben und Senken Funktion als auch eine Funktion zum Einstellen des Bodenanpressdrucks und einen Lageausgleich bei Schräglage des Erntevorsatzes ermöglicht, wobei zwei in Abhängigkeit zueinander stehende Hydraulikzylinder Verwendung finden, die so geschaltet sind, dass über einen Druckausgleich der hubseitigen Kammern ein automatischer Lageausgleich erfolgt. Ferner ist auch der Anpressdruck für den Erntevorsatz über einen zuschaltbaren Hydraulikspeicher variierbar. Die dort offenbarte hydraulische Anordnung weist neben der Verwendung eines Platz raubenden Hydraulikspeichers eine hohe Bauteilanzahl von hydraulischen Komponenten auf, die einen erheblichen konstruktiven Aufwand erfordern und kostenintensiv sind.

Ferner sind weitere hydraulische Anordnungen für Hubwerke an Erntemaschinen bekannt. So offenbart die EP 1 108351 A1 einen Mähdrescher mit einer Schneidwerksbaugruppe, die von einem hydraulischen Hubwerk getragen wird. Die hydraulische Anordnung umfasst eine Tasteinrichtung sowie einen mit einer Druckkammer eines Hubzylinders verbundenen Hydraulikspeicher und ist derart ausgebildet, dass bei Aktivieren der Tasteinrichtung, beispielsweise durch ein auf die Schneidwerksbaugruppe wirkendes Hindernis, die Schneidwerksbaugruppe ohne Verzögerung angehoben wird. Ein hydraulisch gesteuerter Bodenanpressdruck für die Schneidwerksbaugruppe ist hiermit jedoch nicht einstellbar.

Die der Erfindung zugrunde liegende Aufgabe wird darin gesehen, eine hydraulische Anordnung der eingangs genannten Art anzugeben, durch welche die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird eine hydraulische Anordnung der eingangs genannten Art derart ausgebildet, dass in der ersten Abflussleitung ein erstes elektroproportionales Überdruckventil und in der ersten Zuflussleitung ein in Richtung des Zuflussventils schließendes erstes Rückschlagventil angeordnet sind, sowie ein oder mehrere mit dem wenigstens ersten Hydraulikzylinder in Bezug stehende, ein Sensorsignal erzeugende, Sensoren vorgesehen sind, wobei das wenigstens erste Überdruckventil in Abhängigkeit von dem einen oder mehreren Sensorsignalen und/oder von dem Verstellsignal steuerbar bzw. regelbar ist. Durch die Anordnung des elektronisch proportional ansteuerbaren Überdruckventils in der Abflussleitung des Hydraulikzylinders kann die Kammer des Hydraulikzylinders gezielt entleert werden, so dass in Verbindung mit dem proportional verstellbaren bzw. ansteuerbaren Zuflussventil sowohl eine Heben und Senken Funktion als auch eine dosierte Druckbeaufschlagung der Kammer erfolgen kann, um beispielsweise einen Bodenanpressdruck für ein an ein Hubwerk einer landwirtschaftlichen Maschine angebrachtes Anbaugerät einzustellen. Die Entleerung der Kammer erfolgt nur über das Überdruckventil in der Ablassleitung, da eine Entleerung der Kammer über das Zuflussventil durch Anordnung des Rückschlagventils in der Zuflussleitung verhindert wird. Eine gezielte Ansteuerung bzw. Regelung des Überdruckventils erfolgt über die elektronische Steuereinheit, durch welche die Steuersignale für das Überdruckventil und für das Zuflussventil in Abhängigkeit eines oder mehrerer Sensorsignale und/oder in Abhängigkeit von dem Verstellsignal, durch welches beispielsweise ein Befüllen oder Entleeren der Kammer bzw. eine Heben oder Senken Funktion initiiert wird, generiert werden. Das Entleeren der Kammer kann ferner auch durch unterschiedliche Öffnungsquerschnitte des Überdruckventils mit unterschiedlicher Geschwindigkeit erfolgen, da durch den Öffnungsquerschnitt des Überdruckventils die abfließende Menge an Hydraulikflüssigkeit begrenzt wird. Die erfindungsgemäße hydraulische Anordnung ist derart ausgebildet, dass durch eine Heben und Senken Funktion in Kombination mit der steuerbaren Druckbegrenzung verschiedene Funktionen ermöglicht werden. So kann ein Vorsatz- oder Anbaugerät einer landwirtschaftlichen Maschine, welches an einem mit der erfindungsgemäßen hydraulischen Anordnung betriebenen Hubwerk befestigt ist, angehoben und abgesenkt werden bzw. von einer Transportstellung in eine Betriebsstellung gebracht werden, wobei in der Betriebsstellung beispielsweise ein Bodenanpressdruck vorgegeben werden kann. Ferner ermöglicht die erfindungsgemäße hydraulische Anordnung weitere Funktionen, wie beispielsweise eine Lageregelung bzw. einen Lageausgleich, eine Schwingungstilgung, eine Schwimmstellung sowie eine Zugkraftregelung, wobei die einzelnen genannten Funktionen anhand der später beschriebenen Ausführungsbeispiele beschrieben werden.

Die hydraulische Anordnung kann neben dem ersten Hydraulikzylinder auch noch einen zweiten Hydraulikzylinder aufweisen, der im Wesentlichen in gleicher Weise, also analog zum ersten Hydraulikzylinder, über ein zweites Zuflussventil, welches entsprechend über eine zweite Zuflussleitung parallel zum ersten Zuflussventil angeordnet wird, betrieben wird. Auf gleiche Weise können noch weitere Hydraulikzylinder angeordnet und betrieben werden. Somit kann parallel zum ersten Hydraulikzylinder wenigstens ein zweiter eine mit Druck beaufschlagbare Kammer aufweisender Hydraulikzylinder vorgesehen sein, der analog zum dem ersten Hydraulikzylinder mit einer zweiten mit einem zweiten Rückschlagventil versehenen Zuflussleitung und einer zweiten mit einem zweiten elektroproportionalen Überdruckventil versehenen Abflussleitung versehen ist, wobei das zweite Überdruckventil in Abhängigkeit von dem einen oder mehreren Sensorsignalen und/oder von dem Verstellsignal steuerbar bzw. regelbar ist. In gleicher Weise können auch weitere Hydraulikzylinder mit entsprechend weiteren Zuflussventilen sowie An- und Abflussleitungen bzw. Überdruck- und Rückschlagventilen vorgesehen sein. Damit können zwei oder mehrere Hydraulikzylinder unabhängig voneinander betrieben werden, jedoch synchron zueinander in Abhängigkeit der Steuersignale ihre Kolbenstellung verändern.

In einer weiteren Ausführungsform kann der zweite oder weitere Hydraulikzylinder auch in Abhängigkeit von ihm selbst zugeordneten Sensoren angesteuert werden. Dazu können ein oder mehrere mit dem zweiten oder den weiteren Hydraulikzylindern in Bezug stehende, ein Sensorsignal erzeugende, Sensoren vorgesehen sein. Das zweite oder die weiteren Überdruckventile können dann in Abhängigkeit von dem einen oder mehreren von den mit dem zweiten oder weiteren Hydraulikzylinder in Bezug stehenden Sensoren erzeugten Sensorsignalen steuerbar bzw. regelbar sein. Somit können die Hydraulikzylinder unabhängig voneinander ansteuerbar und damit individuell regelbar sein, so dass beispielsweise eine Sensor gesteuerte Lageregelung entsprechend der Anordnung und Ausrichtung der einzelnen Hydraulikzylinder am Hubwerk erfolgen kann, indem die verschiedenen Hydraulikzylinder unterschiedliche Kolbenstellungen aufweisen.

Die Verstellmittel sind vorzugsweise als Betätigungshebel, insbesondere Joystick, oder Betätigungsschalter ausgebildet.
Eine Bedienperson kann dann durch Betätigung des Betätigungshebels bzw. Joysticks oder durch Schalten eines Betätigungsschalters verschiedene Funktionen ausüben, wie z.B. das Anheben oder Absenken eines Anbaugerätes am Vorgewende eines Feldes oder bei Transportfahrten. Bei Betätigung des Verstellmittels werden entsprechende Signale an die Steuereinheit gesendet die diese zur Generierung entsprechender Steuersignale für das Zuflussventil und das Überdruckventil verwertet. Dabei können zur Generierung der Steuersignale sowohl allein das Verstellsignal als auch weitere von den Sensoren gelieferte Signale herangezogen werden, so dass zusätzlich beispielsweise beim Absenken auch die Absenkgeschwindigkeit durch ein entsprechendes Sensorsignal überwacht und der Öffnungsdruck bzw. der Öffnungsquerschnitt des Überdruckventils entsprechend begrenzt wird.

Die Sensoren können beispielsweise als Positionssensor ausgebildet sein, welche ein zu einer Stellung eines Hydraulikzylinderkolbens proportionales Sensorsignal liefern. Damit können Kolbenbewegungen erfasst werden und die gelieferten Signale beispielsweise zur Regelung bzw. Steuerung von Bewegungsgeschwindigkeiten (Absenkgeschwindigkeiten) oder auch zur Tilgung von Schwingungsbewegungen herangezogen werden.

Die Sensoren können beispielsweise auch als Drucksensor ausgebildet sein, welche ein zu einem Druck in der Kammer eines Hydraulikzylinders proportionales Sensorsignal liefern. Damit können Druckzustände erfasst werden und die gelieferten Signale beispielsweise zur Regelung bzw. Steuerung des Kammerdrucks eines Hydraulikzylinders herangezogen werden, wobei je nach Anordnung des Hydraulikzylinders diese Sensorsignale beispielsweise eine Regelung bzw. Steuerung des Anpressdrucks für ein Vorsatz- bzw. Anbaugerät oder auch der Zugkraft für ein gezogenes Arbeitsgerät ermöglichen. Alternativ können anstelle von Drucksensoren auch Kraftmessbolzen oder andere Sensoren eingesetzt werden, die einen Rückschluss auf den in der Kammer des Hydraulikzylinders herrschenden Drucks ermöglichen.

Eine erfindungsgemäße hydraulische Anordnung kann ferner auch ein oder mehrere Einstelleinrichtungen umfassen, vorzugsweise ein mit der Steuereinheit in Verbindung stehende Potentiometer, mit welcher eine Stellgröße für die Steuereinheit vorgebbar ist. Dadurch kann ein Richtwert oder Sollwert für ein durch einen Sensor geliefertes Signal vorgegeben werden, so dass beispielsweise der in der Kammer wirkende Druck oder auch die Bewegungsgeschwindigkeit des Hydraulikzylinderkolbens begrenzbar bzw. einstellbar ist. Eine Bedienperson kann dann beispielsweise durch Betätigung der Einstelleinrichtung den maximalen Anpressdruck vorgeben woraufhin ein entsprechendes Steuersignal bzw. eine entsprechende Steuerprozedur durch die Steuereinheit generiert wird. Analoges gilt für eine Einstelleinrichtung zur Vorgabe einer anderen Stellgröße wie z.B. der Absenkgeschwindigkeit, wobei dann eine Positionsänderung pro Zeiteinheit des Kolbens eines Hydraulikzylinders einstellbar bzw. begrenzbar ist.

Erfindungsgemäß kann die Hydraulikpumpe der hydraulischen Anordnung als Konstantstrompumpe ausgebildet sein, wobei das Zuflussventil ausgangsseitig neben der Verbindung zum Hydraulikzylinder (Zuflussleitung) auch eine Verbindung zum Hydrauliktank aufweist. Dadurch wird gewährleistet, dass wenn keine Hydraulikflüssigkeit mehr in die Kammer fließen soll trotzdem ein Hydraulikflüssigkeitsfluss bestehen bleibt, der dann in den Tank geleitet wird, so dass die Pumpe unverändert weiterfördern kann. Der Druck in der Kammer wird dann nicht über die von der Pumpe geförderten Menge an Hydraulikflüssigkeit gesteuert sondern über die von dem Zuflussventil durchgelassene konstant von der Pumpe geförderten Menge.

Eine alternative Ausführungsform sieht vor, dass die Hydraulikpumpe als ein Verstellpumpensystem ausgebildet ist, welches in Abhängigkeit von einem in der ersten und oder zweiten bzw. weiteren Zuflussleitung wirkenden Druck verstellbar ist, wobei eine Load-Sensing Einrichtung (Einrichtung zur Lasterkennung bzw. Druckerkennung in der Zuflussleitung) vorgesehen ist, über welche das Verstellpumpensystem verstellbar bzw. regelbar ist. Das Zuflussventil weist hierbei eingangsseitig eine Verbindung zum Hydrauliktank auf, wobei der sich in der Zuflussleitung aufbauende Druck bei eingangsseitig zum Verstellpumpensystem geschlossenem Zuflussventil über den Tank abbauen kann, so dass sich das in einer Zuflussleitung befindliche Rückschlagventil schließt und die Load-Sensing Einrichtung entsprechend entlastet wird. Die Fördermenge des Verstellpumpensystems wird dabei bedarfsgesteuert über die mit der oder den Zuflussleitungen verbundene Load-Sensing Einrichtung variiert, so dass der Druck in der Kammer eines Hydraulikzylinders bei eingangsseitig zum Verstellpumpensystem geöffneten Zuflussventil direkt durch die von dem Verstellpumpensystem geförderte Menge an Hydraulikflüssigkeit bestimmt wird.

Die erfindungsgemäße hydraulische Anordnung kann ferner mit weiteren Sensoren in Verbindung stehen, beispielsweise Kontaktsensoren, durch welche eine Lage eines an einem Hubwerk einer landwirtschaftlichen Maschine befestigten Vorsatzgerätes oder Anbaugerätes in Bezug auf die Bodenoberfläche erfasst wird, so dass durch entsprechende Ansteuerung der hydraulischen Komponenten der hydraulischen Anordnung eine Lageregelung des Vorsatzgerätes bzw. Arbeitsgerätes in Bezug auf die Bodenoberfläche erfolgen kann. So kann beispielsweise ein Hangausgleich erfolgen, so dass das Vorsatzgerät bzw. Arbeitsgerät stets parallel zur Bodenoberfläche geführt wird und Bodenunebenheiten, die sich auf das Arbeitsergebnis nachteilig auswirken können, kompensiert werden. Derartige Kontaktsensoren können beispielsweise beidseitig des Hubwerks bzw. des Vorsatzgeräts bzw. des Arbeitsgeräts angeordnet sein und ein Differenzsignal anzeigen, sobald eine Seite des Hubwerks bzw. des Vorsatzgeräts bzw. des Arbeitsgeräts den Abstand zum Boden verändert.

Anhand der Zeichnungen, die ein Ausführungsbeispiel der Erfindung zeigen, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine landwirtschaftliche Maschine in Form eines Mähdreschers mit einer erfindungsgemäßen hydraulischen Anordnung für ein Hubwerk und
- Fig. 2: einen schematischen Schaltplan für eine erfindungsgemäße hydraulische Anordnung mit einem Konstantpumpensystem und
- Fig. 3: einen schematischen Schaltplan für eine erfindungsgemäße hydraulische Anordnung mit einem Verstellpumpensystem.

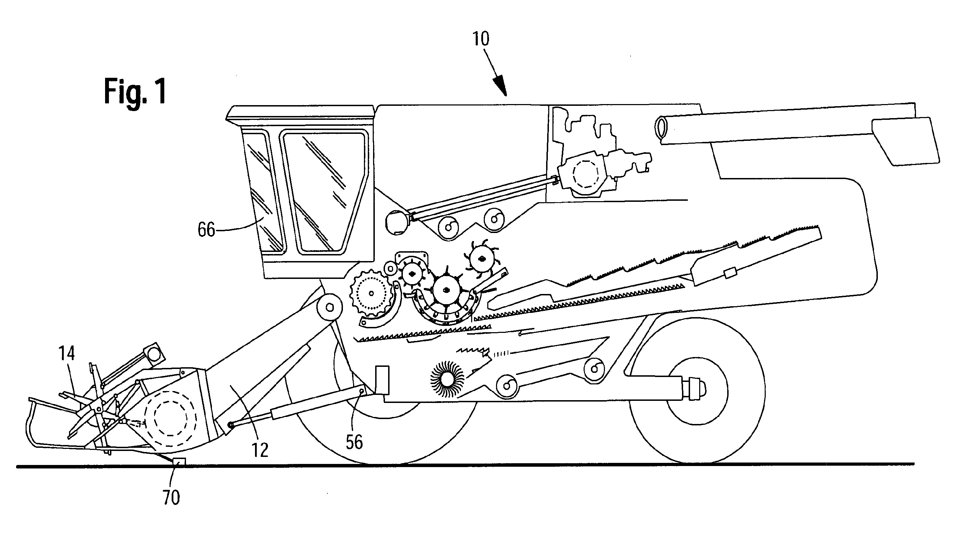

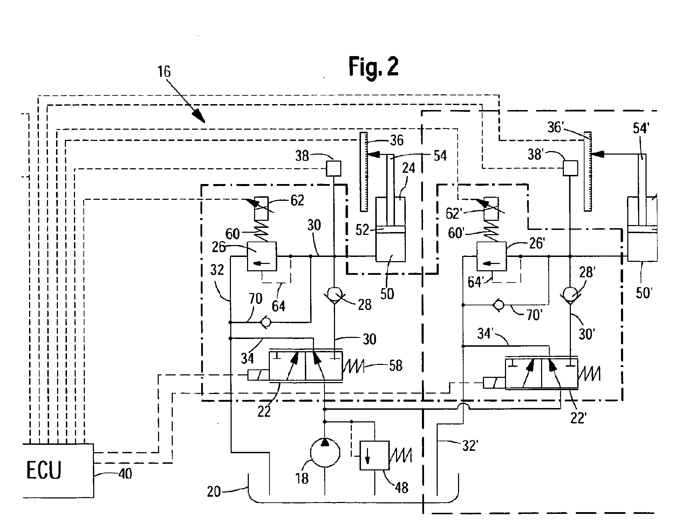

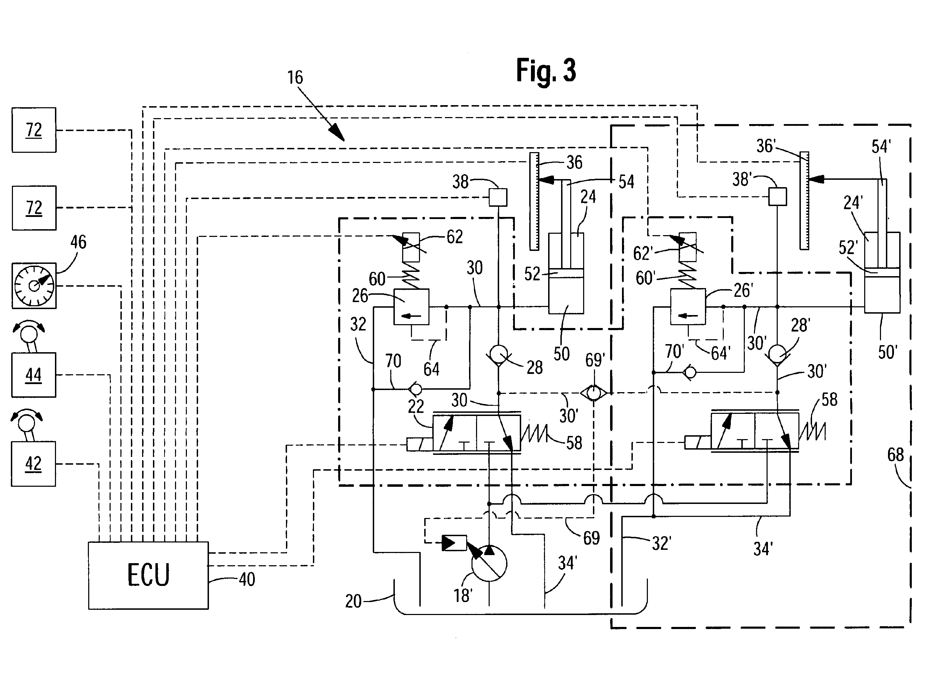

Figur 1 zeigt eine landwirtschaftliche Maschine 10 in Form eines Mähdreschers mit einem Hubwerk 12, welches ein als Haspel ausgebildetes Vorsatzgerät 14 aufweist. Das Hubwerk 12 wird über eine erfindungsgemäße hydraulische Anordnung 16 betätigt, welche im Detail in den Figuren 2 und 3 dargestellt wird. Die Darstellung der landwirtschaftlichen Maschine 10 als Mähdrescher erfolgt exemplarisch. Es können auch andere landwirtschaftliche Maschinen mit der erfindungsgemäßen hydraulischen Anordnung 16 ausgestattet um ein Arbeits- oder Vorsatzgerät 14 in seiner Stellung zu verändern bzw. anzuheben oder abzusenken. So kann die Erfindung beispielsweise auch an Traktoren Einsatz finden oder an anderen landwirtschaftlichen Maschinen, an denen Hubwerke 12 zum Heben und Senken von Arbeits- bzw. Vorsatzgeräten 14 Einsatz finden.

Eine erfindungsgemäße hydraulische Anordnung 16 weist eine Hydraulikpumpe 18, einen Hydrauliktank 20, ein proportional verstellbares Zuflussventil 22, einen Hydraulikzylinder 24, ein elektroproportionales Überdruckventil 26, ein in Richtung des Zuflussventils 22 schließendes Rückschlagventil 28, eine Zuflussleitung 30, eine erste Abflussleitung 32 und eine zweite Abflussleitung 34 auf.

Ferner ist eine Positionssensor 36 und ein Drucksensor 38 vorgesehen.

Zur Ansteuerung der hydraulischen Anordnung 16 ist eine elektronische Steuereinheit 40 vorgesehen, die mit Verstellmittel 42, einem mehrere Schaltstellungen aufweisenden Betätigungsschalter 44 sowie mit einer Einstelleinrichtung 46 in Verbindung steht und elektronische Signale von den Sensoren 36, 38, den Verstellmitteln 42, dem Betätigungsschalter 44, und der Einstelleinrichtung 46 empfängt und auswertet, sowie Steuersignale für die elektronisch ansteuerbaren hydraulischen Komponenten (Zuflussventil 22, Überdruckventil 26) generiert und aussendet.

Zur Druckbegrenzung der von der Hydraulikpumpe 18 geförderten Hydraulikflüssigkeit ist eine Druckbegrenzungseinheit 48 vorgesehen, die überschüssige Hydraulikflüssigkeit in den Hydrauliktank 20 leitet.

Der Hydraulikzylinder 24 weist eine mit Druck beaufschlagbare Kammer 50 auf, die über einen beweglichen Kolben 52 abgeschlossen ist, wobei der Kolben 52 über eine Kolbenstange 54 schwenkbar mit dem Hubwerk 12 und der Hydraulikzylinder 24 kolbenbodenseitig schwenkbar mit einem Rahmenteil 56 der landwirtschaftlichen Maschine 10 verbunden ist. Hierbei kann selbstverständlich auch eine umgekehrte Anordnung Anwendung finden.

Das Zuflussventil 22 ist als proportional verstellbares 3/2 Wegeventil ausgebildet, wobei es eingangsseitig mit der Hydraulikpumpe 18 und ausgangsseitig zum einen mit der Zuflussleitung 30 und zum anderen mit der zweiten Abflussleitung 34 verbunden ist. Die zweite Abflussleitung 34 mündet über die erste Abflussleitung 32 in den Hydrauliktank 20. Sie kann jedoch auch direkt in den Tank 20 geführt werden. In einem ersten Ausführungsbeispiel ist die Hydraulikpumpe 18 als Konstantförderpumpe ausgebildet. Die zweite Abflussleitung 34 gewährleistet, dass, bei ausgangsseitig des Zuflussventils 22 zur Zuflussleitung 30 geschlossener Stellung, überschüssige Hydraulikflüssigkeit in den Hydrauliktank 20 abfließen kann.

Die Zuflussleitung 30 verbindet das Zuflussventil 22, welches über die elektronische Steuereinheit 40 elektronisch ansteuerbar ist und über eine Vorspannfeder 58 in eine zur Zuflussleitung 30 geschlossene Grundstellung vorgespannt ist, mit der Kammer 50 des Hydraulikzylinders, wobei die Zuflussleitung 30 in die erste Abflussleitung 32 mündet. Die Zuflussleitung 30 kann jedoch auch als separat geführte Leitung in die Kammer münden. Das Rückschlagventil 28 ist derart angeordnet, dass ein Rückströmen der von der Hydraulikpumpe 18 der Kammer 50 zugeführten Hydraulikflüssigkeit über die Zuflussleitung 30 verhindert wird, wobei das Rückschlagventil 28 zwischen der Einmündung der Zuflussleitung 30 in die Abflussleitung 32 und dem Zuflussventil angeordnet ist.

Die erste Abflussleitung 32 verbindet die Kammer 50 mit dem Hydrauliktank 20, wobei das Überdruckventil 26 derart angeordnet ist, dass ein kontrolliertes bzw. steuerbares bzw. regelbares Abfließen von Hydraulikflüssigkeit aus der Kammer 50 über die erste Abflussleitung 32 in den Hydrauliktank 20 erfolgen kann. Das Überdruckventil 26 ist als elektrisch steuerbares bzw. regelbares Überdruckventil 26 ausgebildet und wird über eine Vorspannfeder 60 in eine geschlossene Grundstellung vorgespannt. Über eine elektromagnetische Regelspule 62 kann das Überdruckventil 26 von der elektronischen Steuereinheit 40 angesteuert bzw. aufgesteuert bzw. aufgeregelt werden, d. h. der am Überdruckventil 26 einstellbare Öffnungsdruck kann vorgegeben, so dass je nach in der Kammer 50 vorherrschendem Hydraulikdruck ein Abfluss von Hydraulikflüssigkeit aus der Kammer 50 in den Hydrauliktank 20 erfolgen kann. Bei Ausfall der Elektronik wird das Überdruckventil 26 automatisch durch die Vorspannfeder 60 in die geschlossene Grundstellung gebracht. Eine mit der ersten Abflussleitung 32 hydraulikzylinderseitig verbundene Steuerleitung 64 sorgt für eine Überdrucksicherung, so dass bei einem über die Vorspannfeder 62 einstellbaren Grenzdruck das Überdruckventil 26 öffnet. Ein Abfluss an Hydraulikflüssigkeit aus der Kammer 50 in den Hydrauliktank 20 kann somit nur über das Überdruckventil 26 erfolgen, da ein Abfluss über die Zuflussleitung 30 durch das Rückschlagventil 28 unterbunden wird.

Der Drucksensor 38 ist derart angeordnet, dass ein in der Kammer 50 wirkender Druck erfassbar ist und von der elektronischen Steuereinheit 40 ausgewertet werden kann bzw. ein dem Druck in der Kammer 50 proportionales Signal in die Generierung von Steuersignalen einfließen kann. In dem dargestellten Ausführungsbeispiel ist der Drucksensor 38 zwischen dem Überdruckventil 26 und dem Hydraulikzylinder 24 in der ersten Abflussleitung 30 angeordnet.

Der Positionssensor 36 ist mit dem Kolben 52 bzw. der Kolbenstange 54 verbunden und erfasst eine Änderung der Position des Kolbens 52 innerhalb des Hydraulikzylinders 24. Die Signale des Positionssensors 36 werden gleichfalls an die elektronische Steuereinheit 40 gesendet und können dort zur Generierung von Steuersignalen ausgewertet bzw. berücksichtigt werden.

Über die Verstellmittel 42, welche beispielsweise als Betätigungshebel bzw. Joystick ausgebildet sind, kann von einer Bedienperson, beispielsweise aus einer Kabine 66 der landwirtschaftlichen Maschine 10 heraus, ein Verstellsignal erfolgen, wobei ein Signal generiert wird, wie zum Beispiel ein Heben oder Senken Signal, welches die elektronische Steuereinheit 40 entsprechend registriert und auswertet und ein entsprechendes Steuersignal zur Ansteuerung der hydraulischen Komponenten (Zuflussventil 22, Überdruckventil 26) erzeugt. Das Gleiche gilt für den Betätigungsschalter 44, mittels dem ein bestimmter Modus einstellbar ist (beispielsweise ein Vorgewendemodus, ein Bodenanpressdruckmodus, ein Schwimmstellungsmodus oder ein Federungsmodus oder ein anderer Modus, der eine bestimmte Steuerungsprozedur für die elektronische Steuereinheit 40 signalisiert), der einen bestimmten, in der elektronischen Steuereinheit 40 abgespeicherten bzw. hinterlegten (voreingestellten) Steueralgorithmus bzw. eine entsprechende Steuerungsprozedur signalisiert.

Die Einstelleinrichtung 46 ist vorzugsweise als einstellbarer Drehknopf bzw. Drehschalter ausgebildet, welcher von einer Bedienperson, beispielsweise aus der Kabine 66 der landwirtschaftlichen Maschine 10 heraus, betätigbar ist. Über die Einstellvorrichtung 46 können Sollwerte bzw. Grenzwerte eingegeben werden, die von der elektronischen Steuereinheit 40 in einem bestimmten Steuerungsalgorithmus bzw. Steuerungsprozedur berücksichtigt werden sollen. Beispielsweise kann ein Drucksollwert bzw. Druckgrenzwert vorgegeben werden, woraufhin die elektronische Steuereinheit einen entsprechenden Steuerungsalgorithmus bzw. eine entsprechende Steuerungsprozedur initiiert, bei dem bzw. der der voreingestellte Druckwert nicht über- bzw. unterschritten wird. Ähnliches ist beispielsweise auch bei Vorgabe eines bestimmten Geschwindigkeitswertes für die Absenkgeschwindigkeit des Hubwerks möglich. Die elektronische Steuereinheit 40 ermittelt dann beispielsweise entsprechend den von dem Positionssensor 54 gelieferten Signalen (in Abhängigkeit von der Zeit) die Absenkgeschwindigkeit des Kolbens 52 und initiiert einen entsprechenden Steueralgorithmus bzw. eine entsprechende Steuerungsprozedur, bei dem bzw. der der eingestellte Sollwert bzw. Grenzwert nicht über- oder unterschritten wird. Weitere Sensoren sind denkbar, die zur Initiierung anderer Überwachungsfunktionen benötigt werden.

Die erfindungsgemäße hydraulische Anordnung kann, wie in Figur 2 dargestellt, einen oder mehrere zusätzliche Blöcke 68 mit weiteren oben beschriebenen hydraulischen Komponenten umfassen, so dass zusätzlich ein weiterer Hydraulikzylinder 24' vorgesehen ist, welcher eine entsprechende Kammer 50' bzw. einen Kolben 52' sowie eine Kolbenstange 54' aufweist und in analoger Weise über eine Zuflussleitung 30', die mit entsprechendem Rückschlagventil 28' versehen ist, und über eine erste Abflussleitung 32' verfügt, in der auf analoge Weise ein entsprechendes Überdruckventil 62' angeordnet ist, wobei der weitere Hydraulikzylinder 24' entsprechend mit einem Positionssensor 36' und einem Drucksensor 38' in Verbindung steht. Ferner ist ein zweites Zuflussventil 22' vorgesehen, um die gleichmäßige Versorgung beider Hydraulikzylinder 24, 24' zu gewährleisten, wobei das zweite Zuflussventil 22' parallel zum ersten Zuflussventil 22 angeordnet ist bzw. parallel von der Hydraulikpumpe 18 versorgt wird und ebenfalls, über eine zweite Abflussleitung 34', ausgangsseitig mit dem Tank 20 verbunden ist. Durch Anordnung dieses zusätzlichen Hydraulikzylinders 24' ist es möglich, eine Lageregelung (Schräglageausgleich) des Hubwerks 12 zu realisieren, indem die beiden Hydraulikzylinder 24, 24' getrennt voneinander angesteuert werden. Eine getrennte Ansteuerung erfolgt bei gemeinsamer Hydraulikpumpe 18 über die von der elektronischen Steuereinheit 40 generierten bzw. initiierten Steuerungsprozeduren, da die elektronische Steuereinheit 40 derart ausgebildet ist, dass beide Hydraulikzylinder 24, 24' unabhängig voneinander über die elektroproportionalen Überdruckventile 26, 26' bzw. über die parallel von der Hydraulikpumpe 18 versorgten Zuflussventile 22, 22' ansteuerbar bzw. anhebbar und absenkbar sind. So kann das Hubwerk 12 entsprechend der Positionierung der Hydraulikzylinder 24, 24' unterschiedlich angehoben bzw. abgesenkt werden und beispielsweise ein schräg bzw. nicht parallel zur Bodenoberfläche liegendes Arbeits- bzw. Vorsatzgerät 14 ausgerichtet werden.

In dem in Figur 2 dargestellten Ausführungsbeispiel ist die Hydraulikpumpe 18 als Konstantstrompumpe bzw. als Konstantpumpensystem ausgebildet. Denkbar ist es jedoch auch, wie in Figur 3 dargestellt ist, die Hydraulikpumpe 18' als Verstellpumpe bzw. als Verstellpumpensystem auszubilden. Dabei erfolgt eine variierbare Ansteuerung der Hydraulikpumpe 18' in Abhängigkeit von dem in der Kammer 50 bzw. 50' wirkenden Druck, gegebenenfalls in Verbindung mit einem von der elektronischen Steuereinheit 40 bzw. von den Verstellmitteln 42 ausgelösten Steuersignalen, so dass nur dann Hydraulikflüssigkeit gefördert wird, wenn der (oder die) Hydraulikzylinder 24, 24' angehoben werden soll(en). Zur Steuerung der als Verstellpumpensystem ausgebildeten Hydraulikpumpe 18' in Figur 3 kann alternativ zu den Drucksensoren 38, 38' auch eine Load-Sensing Einrichtung 69 vorgesehen sein, über welche der Druck in der bzw. den Zuflussleitungen 30, 30' erfasst wird und die Verstellung der Hydraulikpumpe 18' in Abhängigkeit der von der Load-Sensing Einrichtung 69 gelieferten Drucksignale erfolgt. Für den Fall, dass nur ein Hydraulikzylinder 24 angesteuert wird, d. h. dass nur ein Zuflussventil 22 vorgesehen ist, erstreckt sich die Load-Sensing Einrichtung 69 zwischen der Zuflussleitung 30 und der Hydraulikpumpe 18'. Bei zwei angesteuerten Hydraulikzylindern 24, 24' erstreckt sich die Load-Sensing Einrichtung entsprechend zwischen beiden Zuflussleitungen 30, 30', wobei über eine in der Load-Sensing Einrichtung 69 angeordnete Druckwaage 69' das jeweils höhere Drucksignal erfasst und zur Steuerung der Hydraulikpumpe 18' herangezogen wird. Bei dem in Figur 3 abgebildeten Ausführungsbeispiel ist das Zuflussventil 22 und 22' auch als 3/2 Wegeventil ausgebildet, jedoch mit zwei hydraulikpumpenseitigen Eingängen (je Schaltstellung) und mit nur einem hydraulikzylinderseitigen Ausgang (je Schaltstellung), derart, dass sich hier eine zweite Abflussleitung 34' eingangsseitig des Zuflussventils 22 bzw. 22' zum Hydrauliktank 20 hin erstreckt, wobei das Zuflussventil 22 bzw. 22' ausgangsseitig nicht mit dem Hydrauliktank 20 verbunden ist, und die Zuflussleitung 30 bzw. 30', bei eingangsseitig des Zuflussventils 22 bzw. 22' zur Hydraulikpumpe 18' geschlossener Stellung, entlüften kann, so dass das Rückschlagventil 28 bzw. 28' schließt. Bei Verwendung einer Load-Sensing Einrichtung 69 als Drucksteuerung für die Hydraulikpumpe 18' wird die Load-Sensing Einrichtung 69 so zum Tank 20 hin entlastet. Die Überdruckeinrichtung 48 aus Figur 2 kann bei dem in Figur 3 dargestellten Ausführungsbeispiel entfallen. Wie schon erwähnt, kann die hier beschriebene Schaltung zur Ansteuerung von einem oder mehreren Hydraulikzylindern 24 bzw. 24' verwendet werden, wobei bei nur einem Hydraulikzylinder 24 die entsprechenden im Block 68 dargestellten und mit dem zweiten oder weiteren Hydraulikzylinder 24' in Verbindung stehenden Komponenten entfallen können.

Nachstehend werden nun einige Funktionen beschrieben, die mit der erfindungsgemäßen hydraulischen Anordnung durchführbar sind. Heben und Senken, Schwingungstilgung, Schwimmstellung, Bodenanpressdruckregelung, Lageregelung und Zugkraftregelung.

Heben und Senken wird, wie bereits erwähnt, vorzugsweise durch Betätigung der Verstelleinrichtung 42 durchgeführt. Wird die Verstelleinrichtung 42 (beispielsweise der Betätigungshebel eines Joysticks) in Hebestellung gebracht, erfolgt ein Verstellsignal, welches an die elektronische Steuereinheit 40 gesendet wird. Diese wiederum generiert, gemäß einer implementierten Steuerungsprozedur, ein Steuersignal für das Zuflussventil 22, welches in eine Öffnungsstellung für die Zuflussleitung 30 bzw. 30' verschoben wird. Im Falle des Verstellpumpensystems wird gleichzeitig die Hydraulikpumpe 18' angesteuert (entweder elektrohydraulisch über die Drucksensoren 38, 38' und die Steuereinheit 40 oder hydraulisch über die Load-Sensing Einrichtung 69) und entsprechend Hydraulikflüssigkeit gefördert. Über das sich öffnende Rückschlagventil 28 bzw. 28' strömt Hydraulikflüssigkeit in die Kammer 50 bzw. 50' des Hydraulikzylinders 24 bzw. 24', so dass sich der Kolben 52 bzw. 52' in Richtung der Kolbenstange 54 bzw. 54' bewegt bzw. anhebt. Die Verstelleinrichtung 42 weist neben der Hebestellung eine Neutralstellung und eine Senkenstellung auf. In der Neutralstellung wird die sich in der Kammer 50 bzw. 50' befindliche Hydraulikflüssigkeit über das sich automatisch schließende Rückschlagventil 28, bzw. 28' und über das geschlossene Überdruckventil 26 bzw. 26' gehalten, wobei das Zuflussventil 22 über ein entsprechendes durch die elektronische Steuereinheit 40 generiertes Steuersignal wieder in die geschlossene Ausgangsstellung für die Zuflussleitung 30 bzw. 30' verschoben wird. Im Falle der als Konstantstrompumpe ausgebildeten Hydraulikpumpe 18 kann die konstant weiter geförderte Hydraulikflüssigkeit über die zweite Abflussleitung 34 in den Hydrauliktank 20 abfließen. Im Falle der als Verstellpumpensystem ausgebildeten Hydraulikpumpe 18' kann die sich in der Zuflussleitung 30 bzw. 30' zwischen dem Rückschlagventil 28 bzw. 28' und dem Zuflussventil 22 befindliche Hydraulikflüssigkeit über die zweite Abflussleitung 34' in den Hydrauliktank abfließen, so dass sich der dort aufgebaute Druck abbaut und sich das Rückschlagventil 28 bzw. 28' automatisch schließt. Wird die Verstelleinrichtung 42 in Senkstellung gebracht, erfolgt wiederum ein Verstellsignal, welches an die elektronische Steuereinheit 40 gesendet wird. Diese wiederum generiert, gemäß der implementierten Steuerungsprozedur, ein Steuersignal für das Überdruckventil 26 bzw. 26', welches auf einen niedrigeren Öffnungsdruck eingestellt wird, als in der Kammer 50 bzw. 50' herrscht, so dass sich das Überdruckventil 26 bzw. 26' öffnet und die sich in der Kammer 50 bzw. 50' befindliche Hydraulikflüssigkeit in den Hydrauliktank 20 entweichen kann und der Kolben 52 bzw. 52' sich absenkt.

Eine Schwingungstilgung wird durch gezielte Auswertung und Nutzung der von den Sensoren 36, 38 bzw. 36', 38' gelieferten Signalen ermöglicht. Das Grundprinzip beruht darauf, dass sich die Last durch den Druck im Hydraulikzylinder 24 bzw. 24' auf dem elektroproportionalen Überdruckventil 26 bzw. 26' abstützt und mögliche Stöße so abgefangen werden können. Dazu ist in der Steuereinheit 40 eine entsprechende Steuerungsprozedur implementiert, welche die Generierung von Steuersignalen zur Schwingungstilgung veranlasst. Die Steuerungsprozedur wird beispielsweise über den Betätigungsschalter 44 aktiviert. Das Überdruckventil 26 bzw. 26' wird derart angesteuert, dass bei Überschreitung eines voreinstellbaren Grenzdrucksrucks Hydraulikflüssigkeit aus der Kammer 50 bzw. 50' entweichen kann, so dass darüber eine gewisse Dämpfungsfunktion geschaffen wird. Der voreinstellbare Grenzdruck kann dabei über die Einstelleinrichtung 46 vorgewählt werden oder auch in der Steuerungsprozedur vorprogrammiert sein. Erfährt der Hydraulikzylinder 24 bzw. 24' einen Stoß, der einen Druckanstieg im System hervorruft, durch den ein Überschreiten des voreinstellbaren Grenzdrucks erfolgt, so öffnen die Überdruckventile 26, 26' selbsttätig und veranlassen ein Einfahren des Hydraulikzylinders 24, 24' bzw. veranlassen ein Einfedern (einfahren) des Kolbens 52, 52'. Gleichzeitig wird über den Positionssensor 36 bzw. 36' die Position des Kolbens 52 bzw. 52' erfasst und gemäß der Heben Funktion der Kolben 52 bzw. 52' wieder in seine ursprüngliche Position (Position vor Einfedern) gebracht. Sollte sich der Kolben 52 bzw. 52' aufgrund eines Stoßes in die entgegen gesetzte Richtung bewegen, so registriert die Steuereinheit 40 über die Positionssensoren 36, 36' einen entsprechenden Verfahrweg des Kolbens 52, 52' und veranlasst mittels der Steuerungsprozedur eine sofortiges Nachfüllen von Hydraulikflüssigkeit gemäß der Heben Funktion. Über die Erfassung der Position des Kolbens 52 bzw. 52' wird nun eine entsprechende Senken Funktion veranlasst und der Kolben 52 bzw. 52' wieder in seine Ausgangsposition gebracht. Diese Prozesse können sich entsprechend beliebig wiederholen, so dass eine Federungsfunktion zur Schwingungstilgung gegeben ist, zumal die erfindungsgemäße hydraulische Anordnung eine hohe Dynamik aufweist, welche besonders bei Vorsatzgeräten (Erntevorsätzen) von Bedeutung ist. Ferner weist die erfindungsgemäße hydraulische Anordnung eine hohe Regelgüte auf, da beispielsweise durch die Erfassung der von dem Drucksensor 38 bzw. 38' gelieferten Signale erkannt wird, ob sich die Last im Hydraulikzylinder 24 bzw. 24' gegebenenfalls verringert hat, so dass eine entsprechende Anpassung für die Ansteuerung des Überdruckventils erfolgen kann, die den geänderten Druckbedingungen genügt.

Eine Funktion für eine Schwimmstellung kann sehr einfach dadurch realisiert werden, indem man langsam das elektroproportionale Überdruckventil 26 bzw. 26' öffnet und dadurch den Kolben 52 bzw. 52' des Hydraulikzylinders 24 bzw. 24' einfährt. Fährt der Kolben 52 bzw. 52' nicht weiter ein, wird das Überdruckventil 26 bzw. 26' weiter geöffnet, so dass Hydraulikflüssigkeit drucklos zwischen Hydrauliktank 20 und Hydraulikzylinder 24 bzw. 24' hin- und herströmen und sich der Hydraulikzylinder 24 bzw. 24' samt Vorsatzgerät oder Anbaugerät bzw. das gesamte Hubwerk entsprechend den Konturen einer Bodenoberfläche frei bewegen kann. Dazu können die Überdruckventile 26, 26' mit einer Nachsaugeinrichtung 70 bzw. 70' versehen sein, um ein Nachströmen von Hydraulikflüssigkeit aus dem Tank 20 zu unterstützen. Die Absenkgeschwindigkeit des Kolbens 52 bzw. 52' kann dabei über den Positionssensor 36 bzw. 36' überwacht werden, so dass der Kolben 52 bzw. 52' des Hydraulikzylinders 24 bzw. 24' nicht zu schnell einfährt und eventuell Beschädigungen hervorruft. Die Aktivierung der Schwimmstellungsfunktion kann ebenfalls über den Betätigungsschalter 44 erfolgen, woraufhin eine entsprechende in der Steuereinheit 40 implementierte Steuerungsprozedur, welche die Generierung von entsprechenden Steuersignalen zur Schwimmstellungsfunktion veranlasst, durchgeführt wird.

Eine Funktion zur Bodenanpressdruckregelung wird ebenfalls durch den Betätigungsschalter 44 aktiviert. Eine entsprechende Steuerungsprozedur ist in der elektronischen Steuereinheit 40 implementiert. Die Steuerungsprozedur veranlasst einen konstanten Volumenstrom von Hydraulikflüssigkeit in die Kammer 50 bzw. 50' des Hydraulikzylinders 24 bzw. 24', der gleichzeitig über das elektroproportionale Überdruckventil 26 bzw. 26' zum Hydrauliktank 20 hin abfließt. Dieses ermöglicht eine sehr effektive Bodenanpressdruckregelung, da der Bodenanpressdruck selbst durch die Einstellung des Überdruckventils 26 bzw. 26' bestimmt wird und kein hoher elektronischer Regelungsaufwand erforderlich ist. Über die Einstelleinrichtung 46 kann ein für die Aufsteuerung des Überdruckventils 26 bzw. 26' maßgeblicher Grenzdruck vorgegeben werden, so dass entsprechend dem durch die Einstelleinrichtung 46 vorgegebenen Wert die Kammer 50 bzw. 50' mit einem Grenzdruck beaufschlagbar ist, welcher einem entsprechenden Bodenanpressdruck hervorruft. Die in die Kammer 50 bzw. 50' strömende Menge an Hydraulikflüssigkeit wird derart reguliert, dass der durch das Eigengewicht des Hubwerks 12 (samt Vorsatzgerät bzw. Anbaugerät) auf die Bodenoberfläche ausgeübte Bodenanpressdruck in einem gewünschten, durch die Einstelleinrichtung 46 vorgegebenen Maße kompensiert wird, so dass beispielsweise bei vollständiger Kompensation der Eigengewichtskraft des Hubwerks der gesamte resultierende Bodenanpressdruck gleich Null ist. Ein maximaler resultierender Bodenanpressdruck wird demnach erzielt, indem das gesamte Eigengewicht des Hubwerks auf der Bodenoberfläche lastet und die Kammer 50 bzw. 50' entsprechend druckentlastet ist. Selbstverständlich ist durch Verwertung der von dem Drucksensor 38 bzw. 38' gelieferten Signale der Bodenanpressdruck durch stetiges Heben und Senken des Kolbens 52 bzw. 52' des Hydraulikzylinders 24 bzw. 24' regelbar.

Eine Lageregelung wird durch Erfassung und Überwachung der von den Positionssensoren 36 bzw. 36' gelieferten Signale erzielt. Eine Aktivierung der Lageregelung kann ebenfalls durch den Betätigungsschalter 44 signalisiert werden. Eine entsprechende Steuerungsprozedur ist in der elektronischen Steuereinheit 40 implementiert. Die elektronische Steuereinheit vergleicht dabei die von den Positionssensoren 36 und 36' gelieferten Signale und veranlasst eine entsprechende Korrektur der Hydraulikzylinder 24 und 24'. Damit können zum einen Schräglagen des Hubwerks 12 ausgeglichen werden, zum anderen können jedoch auch Schräglagen gezielt hervorgerufen werden, indem beispielsweise über an der landwirtschaftlichen Maschine 10 oder am Hubwerk 12 bzw. am Vorsatzgerät 14 oder am Arbeitsgerät angeordnete weitere Sensoren 72 entsprechende Signale geliefert werden, durch die eine Lageänderung des Hubwerks 12 bzw. des Vorsatzgeräts 14 oder des Arbeitsgeräts initiiert wird. Derartige Sensoren 72 können beispielsweise als Kontaktsensoren ausgebildet sein, die an beiden Seiten des Hubwerks 12 bzw. des Vorsatzgeräts 14 oder des Arbeitsgeräts angeordnet sind und eine Veränderung des Abstands einer der Seiten zum Boden signalisieren, woraufhin eine Nachregelung des entsprechenden Hydraulikzylinders 24, 24' zur Kompensation eines von den Kontaktsensoren geliefertes Differenzsignal erfolgt, um ein zur Bodenoberfläche paralleles Führen des Hubwerks 12 bzw. des Vorsatzgerätes 14 bzw. des Anbaugerätes zu gewährleisten. Das Nachregeln bzw. Regeln der Hydraulikzylinder 24, 24' erfolgt analog der Heben und Senken Funktionen, wie bereits beschrieben.

Eine Zugkraftregelung erfolgt durch entsprechende Auswertung der von den Drucksensoren 38 bzw. 38' gelieferten Signale durch eine entsprechend in der elektronischen Steuereinheit 40 implementierten Steuerungsprozedur. Eine Zugkraftregelung kann dabei ebenfalls durch eine weitere Schalterstellung mit dem Betätigungsschalter 44 aktiviert werden. Durch Vorgabe eines entsprechenden Grenzdruckwertes durch die Einstelleinrichtung 46 kann eine Regelung der durch das an dem Hubwerk 12 angehängte Anbaugerät verursachten Zugkraft erfolgen. Diese Funktion ist in erster Linie für landwirtschaftliche Maschinen, wie z.B. Schlepper, mit als Anhängevorrichtungen, vorzugsweise als Dreipunktanhängevorrichtungen ausgebildeten Hubwerken gedacht, wobei auch andere Anwendungen denkbar sind. So kann beispielsweise ein als Bodenbearbeitungsgerät ausgebildetes Arbeitsgerät eine Zugkraft hervorrufen, die durch die Eindringtiefe des Arbeitsgeräts in den Boden bestimmt wird. Eine entsprechende Druckbelastung des Hubwerks ist mittels der Drucksensoren 38 bzw. 38' erfassbar und entsprechend des vorgebbaren Grenzdruckwertes regelbar, wobei auch hier das Steuern bzw. Regeln der Hydraulikzylinder 24, 24' analog der Heben und Senken Funktionen, wie bereits beschrieben, erfolgt.

Die verschiedenen in der elektronischen Steuereinheit 40 implementierten Steuerungsprozeduren können von einem Fachmann für Steuerungstechnik hydraulischer Komponenten auf einfache Weise vorgesehen werden und stellen keine technische Schwierigkeit dar. Auf eine detaillierte Beschreibung der verschiedenen Steuerungsprozeduren wird daher verzichtet und auf das Allgemeinwissen eines derartigen Fachmanns verwiesen.

Auch wenn die Erfindung lediglich anhand von zwei Ausführungsbeispielen beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Hydraulische Anordnung zur Regelung eines Hubwerks (12) einer landwirtschaftlichen Maschine (10), mit wenigstens einem ersten eine mit Druck beaufschlagbare Kammer (50) aufweisenden Hydraulikzylinder (24), wenigstens einem proportional verstellbaren Zuflussventil (22), welches ausgangsseitig über eine erste Zuflussleitung (30) mit der Kammer (50) und welches eingangsseitig mit einer Hydraulikpumpe (18, 18') verbunden ist, wenigstens einer ersten Abflussleitung (32), welche eine Verbindung zwischen der Kammer (50) und einem Hydrauliktank (20) herstellt, Verstellmittel (42, 44) zur Erzeugung eines Verstellsignals für den Hydraulikzylinder (24) und einer elektronischen Steuereinheit (40), **dadurch gekennzeichnet, dass** in der ersten Abflussleitung (32) ein erstes elektroproportionales Überdruckventil (26) und in der ersten Zuflussleitung (30) ein in Richtung des Zuflussventils (22) schließendes erstes Rückschlagventil (28) angeordnet sind, sowie ein oder mehrere mit dem wenigstens ersten Hydraulikzylinder (24) in Bezug stehende, ein Sensorsignal erzeugende, Sensoren (36, 38) vorgesehen sind, wobei das wenigstens erste Überdruckventil (26) in Abhängigkeit von dem einen oder mehreren Sensorsignalen und/oder von dem Verstellsignal steuerbar bzw. regelbar ist.

2. Hydraulische Anordnung nach Anspruch 1, **dadurch gekennzeichnet, dass** parallel zum ersten Hydraulikzylinder (24) wenigstens ein zweiter eine mit Druck beaufschlagbare Kammer (50') aufweisender Hydraulikzylinder (24') vorgesehen ist, der analog zum ersten Hydraulikzylinder (24) über ein zweites proportional verstellbares Zuflussventil (22') ansteuerbar ist und mit einer zweiten mit einem zweiten Rückschlagventil (28') versehenen Zuflussleitung (30') und einer zweiten mit einem zweiten elektroproportionalen Überdruckventil (26') versehenen Abflussleitung (32') versehen ist, wobei das zweite Überdruckventil (26') in Abhängigkeit von dem einen oder mehreren Sensorsignalen und/oder von dem Verstellsignal steuerbar bzw. regelbar ist.

3. Hydraulische Anordnung nach Anspruch 2, **dadurch gekennzeichnet, dass** ein oder mehrere mit dem zweiten Hydraulikzylinder (24') in Bezug stehende, ein Sensorsignal erzeugende, Sensoren (36', 38') vorgesehen sind und das zweite Überdruckventil (26') in Abhängigkeit von dem einen oder mehreren von den mit dem zweiten Hydraulikzylinder (24') in Bezug stehenden Sensoren (36', 38') erzeugten Sensorsignalen steuerbar bzw. regelbar ist.

4. Hydraulische Anordnung nach einem der Ansprüche 1 bis 3, **dadurch gekennzeichnet, dass** die Verstellmittel (42, 44) als Betätigungshebel, insbesondere Joystick, oder Betätigungsschalter ausgebildet sind.

5. Hydraulische Anordnung nach einem der Ansprüche 1 bis 4, **dadurch gekennzeichnet, dass** wenigstens ein Sensor (36, 36') als Positionssensor ausgebildet ist, welcher ein zu einer Stellung eines Hydraulikzylinderkolbens (52, 52') proportionales Sensorsignal liefert.

6. Hydraulische Anordnung nach einem der Ansprüche 1 bis 5 **dadurch gekennzeichnet, dass** wenigstens ein Sensor (38, 38') ein Drucksensor oder Kraftmessbolzen ist, welcher ein zu einem Druck in der Kammer (50, 50') eines Hydraulikzylinders (24, 24') proportionales Sensorsignal liefert.

7. Hydraulische Anordnung nach einem der Ansprüche 1 bis 6, **dadurch gekennzeichnet, dass** eine Einstelleinrichtung (46) vorgesehen ist, vorzugsweise ein mit der Steuereinheit (40) in Verbindung stehendes Potentiometer, mit welcher eine Stellgröße für die Steuereinheit (40) vorgebbar ist.

8. Hydraulische Anordnung nach einem der Ansprüche 1 bis 7, **dadurch gekennzeichnet, dass** das Zuflussventil (22, 22') ausgangsseitig eine Verbindung zum Hydrauliktank (20) aufweist und die Hydraulikpumpe (18) als Konstantstrompumpe ausgebildet ist.

9. Hydraulische Anordnung nach einem der Ansprüche 1 bis 7, **dadurch gekennzeichnet, dass** das Zuflussventil (22, 22') eingangsseitig eine Verbindung zum Hydrauliktank (20) aufweist und die Hydraulikpumpe (18') als ein in Abhängigkeit von einem in der ersten und oder zweiten bzw. weiteren Zuflussleitung (30, 30') wirkenden Druck verstellbares Verstellpumpensystem ausgebildet ist.

10. Hydraulische Anordnung nach einem der vorhergehenden Ansprüche, **dadurch gekennzeichnet, dass** weitere Sensoren (72) vorgesehen sind, vorzugsweise Kontaktsensoren, die eine Lage eines an einem Hubwerk (12) einer landwirtschaftlichen Maschine (10) befestigten Vorsatzgerätes (14) oder Anbaugerätes in Bezug auf die Bodenoberfläche erfassen und mit der elektronischen Steuereinheit (40) in Verbindung stehen.

## Claims

1. Hydraulic arrangement for regulating a lifting mechanism (12) of an agricultural machine (10), with at least one first hydraulic cylinder (24) having a chamber (50) capable of being acted upon by pressure, with at least one proportionally adjustable inflow valve (22) which is connected on the outlet side via a first inflow line (30) to the chamber (50) and which is connected on the inlet side to a hydraulic pump (18, 18'), with at least one first outflow line (32) which makes a connection between the chamber (50) and a hydraulic tank (20), with adjustment means (42, 44) for generating an adjustment signal for the hydraulic cylinder (24), and with an electronic control unit (40), **characterized in that** a first electroproportional pressure relief valve (26) is arranged in the first outflow line (32) and a first non-return valve (28) closing in the direction of the inflow valve (22) is arranged in the first inflow line (30), and also one or more sensors (36, 38) related to the at least first hydraulic cylinder (24) and generating a sensor signal are provided, the at least first pressure relief valve (26) being controllable or regulatable as a function of the one or more sensor signals and/or of the adjustment signal.

2. Hydraulic arrangement according to Claim 1, **characterized in that**, parallel to the first hydraulic cylinder (24), at least one second hydraulic cylinder (24') is provided, which has a chamber (50') capable of being acted upon by pressure and which can be activated similarly to the first hydraulic cylinder (24) via a second proportionally adjustable inflow valve (22') and is provided with a second inflow line (30') provided with a second non-return valve (28') and a second outflow line (32') provided with a second electroproportional pressure relief valve (26'), the second pressure relief valve (26') being controllable or regulatable as a function of the one or more sensor signals and/or of the adjustment signal.

3. Hydraulic arrangement according to Claim 2, **characterized in that** one or more sensors (36', 38') related to the second hydraulic cylinder (24') and generating a sensor signal are provided, and the second pressure relief valve (26') is controllable or regulatable as a function of the one or more sensor signals generated by the sensors (36', 38') related to the second hydraulic cylinder (24').

4. Hydraulic arrangement according to one of Claims 1 to 3, **characterized in that** the adjustment means (42, 44) are designed as an actuating lever, in particular joystick, or an actuating switch.

5. Hydraulic arrangement according to one of Claims 1 to 4, **characterized in that** at least one sensor (36, 36') is designed as a position sensor which delivers a sensor signal proportional to a position of a hydraulic cylinder piston (52, 52').

6. Hydraulic arrangement according to one of Claims 1 to 5, **characterized in that** at least one sensor (38, 38') is a pressure sensor or load bolt which delivers a sensor signal proportional to a pressure in the chamber (50, 50') of a hydraulic cylinder (24, 24').

7. Hydraulic arrangement according to one of Claims 1 to 6, **characterized in that** a setting device (46) is provided, preferably a potentiometer which is connected to the control unit (40) and by means of which a manipulated variable for the control unit (40) can be predetermined.

8. Hydraulic arrangement according to one of Claims 1 to 7, **characterized in that** the inflow valve (22, 22') has on the outlet side a connection to the hydraulic tank (20), and the hydraulic pump (18) is designed as a constant-flow pump.

9. Hydraulic arrangement according to one of Claims 1 to 7, **characterized in that** the inflow valve (22, 22') has on the inlet side a connection to the hydraulic tank (20), and the hydraulic pump (18') is designed as a variable-displacement pump system adjustable as a function of a pressure acting in the first and/or second or further inflow line (30, 30').

10. Hydraulic arrangement according to one of the preceding claims, **characterized in that** further sensors (72) are provided, preferably contact sensors which detect with respect to the ground surface a position of an attachment (14) or mounted implement fastened to a lifting mechanism (12) of an agricultural machine (10) and which are connected to the electronic control unit (40).

## Revendications

1. Agencement hydraulique pour le réglage d'un mécanisme de levage (12) d'une machine (10) agricole, comprenant au moins un premier vérin hydraulique (24) présentant une chambre (50) pouvant être alimentée en pression, au moins une soupape d'arrivée (22) réglable de façon proportionnelle, laquelle est reliée côté sortie par une première conduite d'arrivée (30) à la chambre (50) et est reliée côté entrée à une pompe hydraulique (18, 18'), au moins une première conduite d'écoulement (32), qui établit une liaison entre la chambre (50) et un réservoir hydraulique (20), des moyens de réglage (42, 44) pour la génération d'un signal de réglage pour le vérin hydraulique (24) et une unité de commande (40) électronique, **caractérisé en ce qu'**une première soupape de surpression (26) électroproportionnelle est disposée dans la première conduite d'écoulement (32) et un premier clapet anti-retour (28) fermant en direction de la soupape d'arrivée (22) est disposé dans la première conduite d'arrivée (30), et un ou plusieurs capteurs (36, 38) en rapport avec ledit au moins un premier vérin hydraulique (24) et générant un signal de capteur sont prévus, ladite au moins une première soupape de surpression (26) pouvant être commandée et/ou ou réglée en fonction d'un ou de plusieurs signaux de capteur et/ou du signal de réglage.

2. Agencement hydraulique selon la revendication 1, **caractérisé en ce qu'**au moins un second vérin hydraulique (24') présentant une chambre (50') pouvant être alimentée en pression est prévu parallèlement au premier vérin hydraulique (24), qui peut être activé de façon analogue au premier vérin hydraulique (24) au moyen d'une seconde soupape d'arrivée (22') réglable de façon proportionnelle et est doté d'une seconde conduite d'arrivée (30') munie d'un second clapet anti-retour (28') et d'une seconde conduite d'écoulement (32') munie d'une seconde soupape à surpression (26') électroproportionnelle, la seconde soupape à surpression (26') pouvant être commandée et/ou ou réglée en fonction d'un ou de plusieurs signaux de capteur et/ou du signal de réglage.

3. Agencement hydraulique selon la revendication 2, **caractérisé en ce qu'**un ou plusieurs capteurs (36', 38') en rapport avec le second vérin hydraulique (24') et générant un signal de capteur sont prévus et la seconde soupape à surpression (26') peut être commandée et/ou ou réglée en fonction d'un ou de plusieurs signaux de capteur généré(s) par les capteurs (36', 38') en rapport avec le second vérin hydraulique (24').

4. Agencement hydraulique selon l'une quelconque des revendications 1 à 3, **caractérisé en ce que** les moyens de réglage (42, 44) sont conçus comme des leviers d'actionnement, en particulier comme joystick ou interrupteur d'actionnement.

5. Agencement hydraulique selon l'une quelconque des revendications 1 à 4, **caractérisé en ce qu'**au moins un capteur (36, 36') est conçu comme capteur de position, qui fournit un signal de capteur proportionnel à une position d'un piston de vérin hydraulique (52, 52').

6. Agencement hydraulique selon l'une quelconque des revendications 1 à 5, **caractérisé en ce qu'**au moins un capteur (38, 38') est un capteur de pression ou un boulon dynamométrique, qui fournit un signal de capteur proportionnel à une pression dans la chambre (50, 50') d'un vérin hydraulique (24, 24').

7. Agencement hydraulique selon l'une quelconque des revendications 1 à 6, **caractérisé en ce qu'**un dispositif de réglage (46) est prévu, de préférence un potentiomètre en liaison avec l'unité de commande (40), avec lequel une grandeur de réglage peut être prédéfinie pour l'unité de commande (40).

8. Agencement hydraulique selon l'une quelconque des revendications 1 à 7, **caractérisé en ce que** la soupape d'arrivée (22, 22') présente côté sortie une liaison avec le réservoir hydraulique (20) et la pompe hydraulique (18) est conçue comme pompe à flux constant.

9. Agencement hydraulique selon l'une quelconque des revendications 1 à 7, **caractérisé en ce que** la soupape d'arrivée (22, 22') présente côté entrée une liaison avec le réservoir hydraulique (20) et la pompe hydraulique (18') est conçu comme un système de pompe de réglage réglable en fonction d'une pression agissant dans la première et/ou la seconde ou dans une autre conduite d'arrivée (30, 30').

10. Agencement hydraulique selon l'une quelconque des revendications précédentes, **caractérisé en ce que** d'autres capteurs (72) sont prévus, de préférence des capteurs de contact, qui enregistrent une position d'un appareil adaptable (14) ou d'un outil porté fixé sur un mécanisme de levage (12) d'une machine (10) agricole par rapport à la surface du sol et sont en liaison avec l'unité de commande (40) électronique.
